# EUROPÄISCHE PATENTSCHRIFT

(11) **EP 0 974 007 B1**
(45) Veröffentlichungstag und Bekanntmachung des Hinweises auf die Patenterteilung: **13.03.2002**
(21) Anmeldenummer: 98919235.6
(22) Anmeldetag: 08.04.1998
(51) Int. Cl.: F02M 55/00, F02M 55/02, F02F 1/24

(54) **BRENNKRAFTMASCHINE MIT EINLASS- UND AUSLASSVENTILEN**
INTERNAL COMBUSTION ENGINE WITH INLET AND OUTLET VALVES
MOTEUR A COMBUSTION INTERNE A SOUPAPES D'ADMISSION ET D'ECHAPPEMENT

(30) Priorität: 09.04.1997 AT 60797
(43) Veröffentlichungstag der Anmeldung: 26.01.2000
(73) Patentinhaber: DEUTZ Aktiengesellschaft, 51063 Köln (DE)
(72) Erfinder: BREITENBERGER, Manfred, 8042 Graz (AT)
(86) Internationale Anmeldenummer: EP9802032
(87) Internationale Veröffentlichungsnummer: WO9845593

(56) Entgegenhaltungen:
- WO-A-95/24551
- AT-B- 382 429
- US-A- 3 125 078
- US-A- 4 485 790

## Beschreibung

Die Erfindung betrifft eine Brennkraftmaschine mit Einlaß- und Auslaßventilen und einem mit einer Kraftstoffzuführleitung und einer Leckölleitung verbundenen Düsenhalter pro Zylinder für eine in einen Brennraum Kraftstoff einspritzende Einspritzdüse, wobei der Düsenhalter in einer ersten Ausnehmung des Zylinderkopfes eingesetzt ist, und wobei der Zylinderkopf etwa normal zu einer die Zylinderachse beinhaltenden Motorlängsebene eine zweite Ausnehmung aufweist, welche von einer ersten Zylinderkopflängsseitenwand ausgehend etwa radial auf die erste Ausnehmung trifft.

Bei Brennkraftmaschinen der eingangs genannten Art besteht kaum Freiraum für die Anordnung der Kraftstoffzuführleitung für die zentrale Einspritzdüse, insbesondere wenn sechs jeweils einen Zylinder umgebende Zylinderkopfschrauben und vier Ventile pro Zylinder vorgesehen sind. Um die Kraftstoffzuführleitung zwischen einer nockenbetätigten Steckpumpe und der Einspritzdüse möglichst kurz zu halten, ist eine zylinderkopflängsseitige Einspeisung in den Zylinderkopf wünschenswert. Der dafür erforderliche Raum ist allerdings häufig bereits von Stößelstangen, Gaswechselkanälen, Zylinderkopfschrauben od. dgl., verbaut.

Die US 3,845,748 A zeigt eine solche seitliche Zufuhr von Kraftstoff. Der allenfalls austretende Kraftstoff wird über einen Spalt zwischen der Zufuhrbohrung und der Kraftstoffleitung zu einer Leckölbohrung rückgeführt. Eine solche Lösung ist jedoch aufwendig und aufgrund einer Vielzahl von Dichtstellen störanfällig.

Aufgabe der vorliegenden Erfindung ist es, für eine Brennkraftmaschine der eingangs genannten Art eine montage- und wartungsfreundliche sowie sichere und platzsparende Kraftstoffzuführleitungsanordnung für eine seitliche Kraftstoffzuführung zu finden.

Erfindungsgemäß wird dies dadurch erreicht, daß sich die zweite Ausnehmung bis auf die zu der ersten Zylinderkopflängsseitenwand gegenüberliegende zweite Zylinderkopflängsseitenwand fortsetzt, in diesem Bereich die Leckölabführung bildet und in eine Leckölleitung im Bereich der zweiten Zylinderkopflängsseitenwand mündet. Dies ermöglicht einerseits eine sehr einfache Fertigung und andererseits eine einfache Montage- und Demontage. Die Leckölleitung verläuft in Motorlängsrichtung.

Eine besonders günstige konstruktive Ausgestaltung, insbesonders im Hinblick auf thermische Beanspruchungen, wird dadurch erreicht, daß die Kraftstoffzuführieitung in der zweiten Ausnehmung von der ersten Zylinderkopflängsseitenwand bis zu einer radialen Eintrittsöffnung des Düsenhalters geführt ist, wobei sie vorzugsweise durch ein in die zweite Ausnehmung eingeschraubtes, als Hohlschraube ausgeführtes Druckstück festgeklemmt ist.

Vorzugsweise ist vorgesehen, daß das Druckstück etwa mittig zwischen der ersten Zylinderkopflängsseitenwand und dem Düsenhalter im Zylinderkopf verschraubt ist und zwischen der Verschraubung und dem Düsenhalter über eine Dichtung, vorzugsweise eine O-Ring-Dichtung, gegenüber dem Zylinderkopf abgedichtet ist, wobei der durch das Druckstück und den Zylinderkopf gebildete abgedichtete Leckölspalt mit der Leckölleitung in Strömungsverbindung steht. Weiters kann eine zusätzliche O-Ring-Dichtung zur Abdichtung des Druckstückes gegenüber dem Zylinderkopf im Bereich der ersten Zylinderkopflängsseitenwand vorgesehen sein. Dadurch wird eine sichere Abdichtung des Druckstückes und der Kraftstoffzuführleitung erreicht, wobei der im Mündungsbereich der Kraftstoffzuführleitung in den Düsenhalter eventuell leckende Kraftstoff in das Leckölsystem eingespeist wird.

In einer besonders bevorzugten Ausführungsvariante der Erfindung ist vorgesehen, daß die Achse der zweiten Ausnehmung im Bereich zwischen der Verschraubung und der ersten Zylinderkopflängsseitenwand die Achse einer zwischen Druckstück und Zylinderkopfdichtfläche in den Zylinderkopf eingeformten Zylinderkopfschraubenöffnung schneidet. In diese Zylinderkopfschraubenöffnung wird bei der Montage zuerst die Zylinderkopfschraube eingeschraubt, sodann kann die Kraftstoffzuführleitung mit dem Druckstück am Düsenhalter angeschlossen werden. Dabei ist vorgesehen, daß die Auflagefläche der Zylinderkopfschraubenöffnung für die Kopffläche der Zylinderkopfschraube unter die zweite Ausnehmung abgesenkt ist.

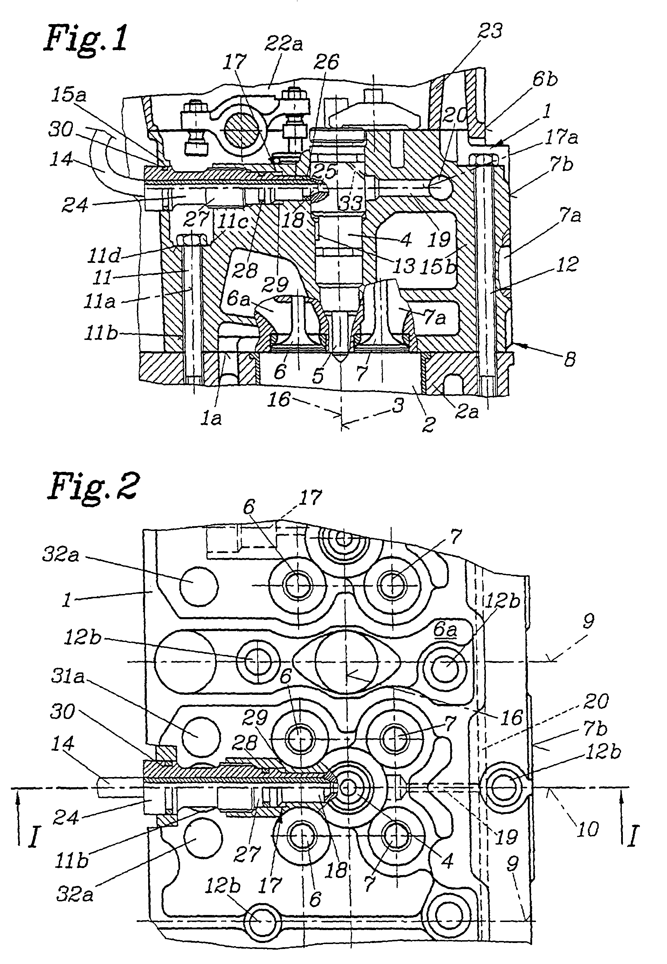

Die Erfindung wird anhand der Figuren näher erläutert. Es zeigen Fig. 1 einen Querschnitt durch den erfindungsgemäßen Zylinderkopf gemäß der Linie I-1 in Fig. 2, Fig. 2 eine Draufsicht auf den Zylinderkopf.

Der Zylinderkopf 1 weist pro Zylinder 2 einen im Bereich der Zylinderachse 3 angeordneten Düsenhalter 4 für eine zentral in den Zylinder 2 mündende Einspritzdüse 5, sowie zwei Einlaßventile 6 und zwei Auslaßventile 7 pro Zylinder 2 auf. Zu den Einlaßventilen 6 bzw. den Auslaßventilen 7 münden Einlaßkanäle 6a bzw. Auslaßkanäle 7a, welche von Flanschflächen 6b bzw. 7b auf der gleichen Längsseite 8 der Brennkraftmaschine ausgehen. Sowohl im Bereich von Motorquerebenen 9 beidseits jedes Zylinders 2 als auch in einer durch die Zylinderachse 3 verlaufenden Motorquerebene 10 sind jeweils zwei den Zylinder 2 umgebende Zylinderkopfschrauben 11, 12 angeordnet.

Der Düsenhalter 4 ist in einer ersten Ausnehmung 13 koaxial zur Zylinderachse 3 im Zylinderkopf 1 eingeschraubt. Der Zugang zum Düsenhalter 4 erfolgt durch eine Kraftstoffzuführleitung 14, die über die den Einlaßflanschflächen 6b und Auslaßflanschflächen 7b gegenüberliegenden ersten Zylinderkopflängsseitenwand 15a in den Zylinderkopf 1 einmündet. Dabei ist die Kraftstoffzuführleitung 14 durch eine normal zur Motorlängsebene 16 angeordnete zweite Ausnehmung 17 in der Querebene 10 zu einer radialen Eintrittsöffnung 25 des Düsenhalters 4 geführt. Die Mündung der Kraftstoffzuführleitung 14 ist mit 18 bezeichnet.

Die zweite Ausnehmung 17 verläuft ausgehend von der Zylinderkopflängsseitenwand 15a normal zur ersten Ausnehmung 13, kreuzt diese radial und setzt sich diametral zur Mündung 18 in die erste Ausnehmung 13 auf der anderen Seite der Motorlängsebene 16 im Zylinderkopf 1 als Ausnehmung 19 für die Leckölabführung fort und mündet schließlich in eine Leckölleitung 20 im Bereich der zweiten Zylinderkopflängsseitenwand 15b. Die Kraftstoffzuführleitung 14 wird von einer nicht näher dargestellten Steckpumpe gespeist, die über einen nicht weiter dargestellten Nocken einer Nockenwelle betätigt wird. Nach oben ist der Zylinderkopf 1 durch ein die nicht näher dargestellte Ventilbetätigungseinrichtung aufnehmendes durch Bezugszeichen 23 angedeutetes Kipphebelgehäuse abgeschlossen, wobei die Einlaßflanschfläche 6b vom Kipphebelgehäuse 23 gebildet wird.

Die Mündung 18 der Kraftstoffzuführleitung 14 wird durch ein als Hohlschraube ausgeführtes Druckstück 24, welches in die zweite Ausnehmung 17 eingeschraubt ist, gegen die Eintrittsöffnung 25 des Düsenhalters 4 gepreßt. Das Druckstück 24 weist dabei ein ringförmiges, elastisches Anpreßelement 26 auf. Zwischen der etwa mittig zwischen der ersten Zylinderkopflängsseitenwand 15a und dem Düsenhalter 4 angeordneten Verschraubung 27 und dem Anpreßelement 26 ist zur Abdichtung des Druckstückes 24 gegenüber dem Zylinderkopf 1 eine O-Ring-Dichtung 28 vorgesehen. Falls es zu einer Kraftstoffleckage zwischen der Mündung 18 und der Eintrittsöffnung 25 des Düsenhalters 4 kommt und Kraftstoff in den Leckölspalt 29 zwischen Druckstück 24 und Zylinderkopf 1 gelangt, wird durch die O-Ring-Dichtung 28 ein weiteres Vordringen in den Ventilbetätigungsraum 22a unterbunden. Der Leckölspalt 29 steht mit dem Leckölkanal 19 in Verbindung, so daß die Leckageflüssigkeit über die Leckölleitung 20 in das Leckölsystem zurückgeführt werden kann. Mit 33 ist eine Leckölaustrittsöffnung des Düsenhalters 4 bezeichnet, welche mit der Ausnehmung 19 für die Leckölabführung verbunden ist.

Wie aus Fig. 1 ersichtlich ist, ist das Druckstück 24 über der Auflagefläche 11c einer Zylinderkopfschraubenöffnung 11b für die Kopffläche 11d einer Zylinderkopfschraube 11 angeordnet, deren Zylinderkopfschraubenachse 11a sich mit der Achse 17a der zweiten Ausnehmung 17 schneidet. Die unterhalb des Druckstückes 24 liegende Zylinderkopfschraube 11 ist dabei kürzer als die anderen Zylinderkopfschrauben 12 ausgeführt. Es versteht sich von selbst, daß eine Betätigung der Zylinderkopfschraube 11 nur bei demontiertem Druckstück 24 möglich ist. Die Montage und Demontage des Druckstückes 24 im Zylinderkopf 1 und dessen sichere Abdichtung ist durch die beschriebene Konstruktion allerdings problemlos möglich.

Im Bereich der ersten Zylinderkopflängsseitenwand 15a ist zwischen Druckstück 24 und Zylinderkopf 1 noch eine weitere Dichtung 30 vorgesehen, die den Betätigungsraum 22a gegen die Umgebung abdichtet.

Wie in Fig. 2 ersichtlich ist, ist das Druckstück 24 samt Kraftstoffzuführleitung 14 zwischen den Bohrungen 31a und 32a für nicht weiter dargestellte Stößelstangen, sowie zwischen den beiden Einlaßventilen 6 über der Zylinderkopfschraube 11 in der Motorquerebene 10 im Zylinderkopf 1 angeordnet. Dadurch ist eine optimale Ausnützung des vorhandenen Freiraumes und damit eine sehr kompakte Konstruktion des Zylinderkopfes 1 bei äußerst kurzen Kraftstoffzuführleitungen 14 möglich.

## Patentansprüche

1. Brennkraftmaschine mit Einlaß- und Auslaßventilen (6, 7) und einem mit einer Kraftstoffzuführleitung (14) und einer Leckölleitung (19) verbundenen Düsenhalter (4) pro Zylinder (2) für eine in einen Brennraum Kraftstoff einspritzende Einspritzdüse (5), wobei der Düsenhalter (4) in einer ersten Ausnehmung (13) des Zylinderkopfes (1) eingesetzt ist, und wobei der Zylinderkopf (1) etwa normal zu einer die Zylinderachse (3) beinhaltenden Motorlängsebene (16) eine zweite Ausnehmung (17) aufweist, welche von einer ersten Zylinderkopflängsseitenwand (15a) ausgehend etwa radial auf die erste Ausnehmung (13) trifft,
**dadurch gekennzeichnet, daß** sich die zweite Ausnehmung (17) bis auf die zu der ersten Zylinderkopflängsseitenwand (15a) gegenüberliegende zweite Zylinderkopflängsseitenwand (15b) als Ausnehmung (19) fortsetzt, in diesem Bereich die Leckölabführung bildet und in eine Leckölleitung (20) im Bereich der zweiten Zylinderkopflängsseitenwand (15b) mündet.

2. Brennkraftmaschine nach Anspruch 1,
**dadurch gekennzeichnet, daß** die Kraftstoffzuführleitung (14) in der zweiten Ausnehmung (17) von der ersten Zylinderkopflängsseitenwand (15a) bis zu einer radialen Eintrittsöffnung (25) des Düsenhalters (4) geführt ist.

3. Brennkraftmaschine nach einem der Ansprüche 1 oder 2,
**dadurch gekennzeichnet, daß** die Kraftstoffzuführleitung (14) durch ein in die zweite Ausnehmung (17) eingeschraubtes, als Hohlschraube ausgeführtes Druckstück (24) festgeklemmt ist.

4. Brennkraftmaschine nach Anspruch 3,
**dadurch gekennzeichnet, daß** das Druckstück (24) etwa mittig zwischen der ersten Zylinderkopflängsseitenwand (15a) und dem Düsenhalter (4) im Zylinderkopf (1) verschraubt ist.

5. Brennkraftmaschine nach einem der Ansprüche 3 oder 4,
**dadurch gekennzeichnet, daß** das Druckstück (24) zwischen der Verschraubung (27) und dem Düsenhalter (4) über eine Dichtung, vorzugsweise eine O-Ring-Dichtung (28) gegenüber dem Zylinderkopf (1) abgedichtet ist, wobei der durch das Druckstück (24) und den Zylinderkopf (1) gebildete abgedichtete Leckölspalt (29) mit der Leckölleitung (20) in Strömungsverbindung steht.

6. Brennkraftmaschine nach Anspruch 5,
**dadurch gekennzeichnet, daß** eine zusätzliche O-Ring-Dichtung (30) zur Abdichtung des Druckstückes (24) gegenüber dem Zylinderkopf (1) im Bereich der ersten Zylinderkopflängsseitenwand (15a) vorgesehen ist.

7. Brennkraftmaschine nach einem der Ansprüche 1 bis 6,
**dadurch gekennzeichnet, daß** die Achse (17a) der zweiten Ausnehmung (17) im Bereich zwischen der Verschraubung (27) und der ersten Zylinderkopflängsseitenwand (15a) die Achse (11a) einer zwischen Druckstück (24) und Zylinderkopfdichtfläche (10) in den Zylinderkopf (1) eingeformten Zylinderkopfschraubenöffnung (11b) schneidet.

8. Brennkraftmaschine nach Anspruch 7,
**dadurch gekennzeichnet, daß** die Auflagefläche (11c) der Zylinderkopfschraubenöffnung (11b) für die Kopffläche (11d) der Zylinderkopfschraube (11) unter die zweite Ausnehmung (17) abgesenkt ist.

## Claims

1. An internal combustion engine with inlet and exhaust valves (6, 7) and a nozzle holder (4) connected to a fuel line (14) and a fuel return line (19) per cylinder (2) for a fuel injection nozzle (5) injecting fuel into a combustion chamber, in which the nozzle holder (4) is set into a first recess (13) of the cylinder head (1), and in which the cylinder head (1) has a second recess (17) approximately normal to an engine longitudinal plane (16) containing the cylinder axis (3) which, extending from a first cylinder head longitudinal side wall (15a), meets the first recess (13) approximately radially, **characterised in that** the second recess (17) extends as far as the second cylinder head longitudinal side wall (15b) opposite the first cylinder head longitudinal side wall (15a) as a recess (19), in this region forms the leakage fuel outflow and discharges into a fuel return line (20) in the region of the second cylinder head longitudinal side wall (15b).

2. An internal combustion engine according to Claim 1, **characterised in that** the fuel line (14) is conducted within the second recess (17) from the first cylinder head longitudinal side wall (15a) as far as a radial entrance opening (25) of the nozzle holder (4).

3. An internal combustion engine according to one of the claims 1 or 2, **characterised in that** the fuel line (14) is firmly clamped by a compression member (24), designed as a hollow screw, screwed into the second recess (17).

4. An internal combustion engine according to Claim 3, **characterised in that** the compression member (24) is screwed approximately centrally between the first cylinder head longitudinal side wall (15a) and the nozzle holder (4) in the cylinder head (1).

5. An internal combustion engine according to one of the claims 3 and 4, **characterised in that** the compression member (24) is sealed between the screw fixing (27) and the nozzle holder (4) by means of a seal, preferably an O-ring seal (28) with respect to the cylinder head (1), in which the sealed leakage fuel gap (29) formed by the compression member (24) and the cylinder head (1) is connected to the fuel return line (20) so as to allow flow.

6. An internal combustion engine according to Claim 5, **characterised in that** an additional O-ring seal (30) is provided for sealing the compression member (24) with respect to the cylinder head (1) in the region of the first cylinder head longitudinal side wall (15a).

7. An internal combustion engine according to one of claims 1 to 6, **characterised in that** the axis (17a) of the second recess (17) in the region between the screw fixing (27) and the first cylinder head longitudinal side wall (15a) intersects the axis (11a) of a cylinder head screw opening (11b) formed in the cylinder head (1) between compression member (24) and cylinder head sealing surface (10).

8. An internal combustion engine according to Claim 7, **characterised in that** the contact surface (11c) of the cylinder head screw opening (11b) for the head surface (11c) of the cylinder head screw (11) is sunk below the second recess (17).

## Revendications

1. Moteur à combustion interne comportant des soupapes d'admission et d'échappement (6, 7) ainsi qu'un support d'injecteur (4) par cylindre (2), ce support étant relié à une conduite d'alimentation en carburant (14) et à une conduite de fuite (19), pour un injecteur (5) injectant du carburant dans une chambre de combustion,
le support d'injecteur (4) étant placé dans une première cavité (13) de la culasse (1) et
la culasse (1) ayant une seconde cavité (17) sensiblement normale à un plan longitudinal de moteur (16) passant par l'axe du cylindre (3), et qui, partant d'une première paroi latérale longitudinale (15a) de la culasse, rencontre sensiblement radialement la première cavité (13),
**caractérisé en ce que**
la seconde cavité (17) se poursuit comme cavité (19) jusque sur la seconde paroi latérale longitudinale (15b) de la culasse, à l'opposé de la première paroi latérale longitudinale de la culasse (15a), formant dans cette zone l'évacuation de fuite, et elle débouche dans une conduite de fuite (20) au niveau de la seconde paroi latérale longitudinale (15b) de la culasse.

2. Moteur à combustion interne selon la revendication 1,
**caractérisé en ce que**
la conduite d'alimentation en carburant (14) passe dans la seconde cavité (17) de la première paroi latérale longitudinale de culasse (15a) jusque dans un orifice d'entrée radial (25) du support d'injecteur (4).

3. Moteur à combustion interne selon l'une quelconque des revendications 1 ou 2,
**caractérisé en ce que**
la conduite d'alimentation en carburant (14) est serrée par une pièce de pression (24) réalisée comme vis creuse, logée dans la seconde cavité (17).

4. Moteur à combustion interne selon la revendication 3,
**caractérisé en ce que**
la pièce de pression (24) est vissée sensiblement au milieu entre la première paroi latérale longitudinale de la culasse (15a) et le support d'injecteur (4) dans la culasse (1).

5. Moteur à combustion interne selon l'une quelconque des revendications 3 ou 4,
**caractérisé en ce que**
la pièce de pression (24) est installée de manière étanche entre la partie vissée (27) et le support d'injecteur (4) par un joint, de préférence un joint torique (28) par rapport à la culasse (1),
l'intervalle de fuite (29) formé par la pièce de pression (24) et la culasse (1) communiquant avec la conduite de fuite (20).

6. Moteur à combustion interne selon la revendication 5,
**caractérisé par**
un joint torique (30) supplémentaire assurant l'étanchéité de la pièce de pression (24) par rapport à la culasse (1) dans la zone de la première paroi latérale longitudinale de la culasse (15a).

7. Moteur à combustion interne selon l'une quelconque des revendications 1 à 6,
**caractérisé en ce que**
dans la zone comprise entre la partie vissée (27) et la première paroi latérale longitudinale de culasse (15a), l'axe (17a) de la seconde cavité (17) coupe l'axe (11a) d'un orifice de vissage de culasse (11b) réalisé entre la pièce de pression (24) et la surface d'étanchéité (10) de la culasse (1).

8. Moteur à combustion interne selon la revendication 7,
**caractérisé en ce que**
la surface d'appui (11c) de l'orifice de vissage (11b) recevant la surface de la tête (11d) de la vis (11) de la culasse, est en creux en dessous de la seconde cavité (17).
